# DEMANDE DE BREVET EUROPEEN

(11) **EP 4 156 391 A1**
(43) Date de publication de la demande: **29.03.2023**
(21) Numéro de dépôt: 22197211.0
(22) Date de dépôt: 22.09.2022
(51) Int. Cl.: H01M 50/211, H01M 50/517, H01M 50/503, H01M 50/505, H01M 10/0525

(54) **BUSBAR POUR MODULE DE BATTERIE OU PACK-BATTERIE À EMPILEMENT D'ACCUMULATEURS À EMBALLAGE SOUPLE, DESTINÉE À CONNECTER ÉLECTRIQUEMENT AU MOINS UN ACCUMULATEUR DU MODULE OU PACK, PROCÉDÉ DE RÉALISATION D'UN MODULE OU PACK-BATTERIE ASSOCIÉ**

(30) Priorité: 23.09.2021 FR 2110004
(71) Demandeur: Commissariat à l'énergie atomique et aux énergies alternatives, 75015 Paris (FR)
(72) Inventeur: MEE, Fabrice, 38054 GRENOBLE cedex 09 (FR); DE PAOLI, Lionel, 38054 GRENOBLE cedex 09 (FR)
(74) Mandataire: Nony

(57) **Abrégé**

Busbar pour module de batterie ou pack-batterie à empilement d'accumulateurs à emballage souple, destinée à connecter électriquement au moins un accumulateur du module ou pack, Procédé de réalisation d'un module ou pack-batterie associé.

L'invention concerne un busbar pour module de batterie ou pack-batterie.

L'invention consiste essentiellement à définir en tant que composant de liaison électrique entre accumulateurs à languettes formant les pôles ou bornes, un busbar (8) dans le corps duquel chaque languette est insérée puis prise en étau par un pion de serrage (10) formant une mâchoire mobile qui peut être déplacée aisément en coulissement dans le corps de sorte à réaliser une connexion électrique en série ou en parallèle en fonction du besoin.

## Description

### Domaine technique

La présente invention concerne le domaine des accumulateurs électrochimiques, et plus particulièrement à des accumulateurs métal-ion.

Plus particulièrement, l'invention a trait à un module de batterie ou à un pack-batterie, à empilement d'accumulateurs à emballage souple.

L'invention vise en premier lieu à fournir un busbar ou barre de connexion électrique améliorée pour la connexion électrique entre la pluralité d'accumulateurs.

Bien que décrite en référence à un accumulateur Lithium-ion, l'invention s'applique à tout accumulateur électrochimique métal-ion, c'est-à-dire également Sodium-ion, Magnésium-ion, Aluminium-ion...ou de manière plus générale à tout accumulateur électrochimique. L'invention s'applique à toute chimie d'accumulateurs métal-ion, comme par exemple NMC/Graphite, NCA/Graphite, NMC/G-Si, LFP/ Graphite, Na-ion avec électrolyte liquide ou électrolyte dit solide.

Un module de batterie pack-batterie avec au moins un busbar selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

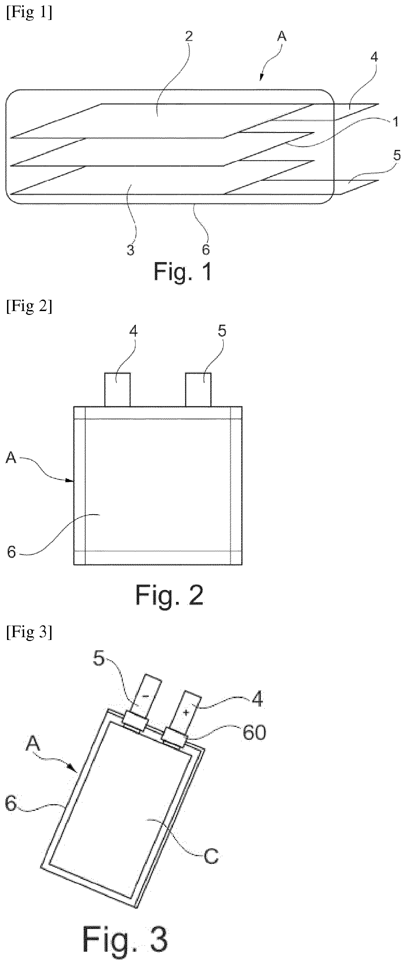

Telle qu'illustrée schématiquement en figures 1 et 2, une batterie ou accumulateur lithium-ion comporte usuellement au moins une cellule électrochimique C constituée d'un constituant d'électrolyte 1, imprégné dans un séparateur permettant d'isoler électriquement les électrodes, entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique et la rendre étanche à l'air extérieur et à l'électrolyte à l'intérieur de la cellule, tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique, avec enroulement autour d'un axe cylindrique telle que divulguée dans la demande de brevet US 2006/0121348,
- une géométrie prismatique, avec enroulement autour d'un axe parallélépipédique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode est constituée de matériaux d'insertion du cation Lithium qui sont en général composite, comme le phosphate de fer lithié LiFePO₄, l'oxyde de cobalt lithié LiCoO₂, l'oxyde de manganèse lithié, éventuellement substitué, LiMn₂O₄ ou d'oxyde de métaux de transition, comme les matériaux lamellaires par exemple, un matériau à base de LiNixMnyCozO₂ avec x+y+z = 1, tel que LiNi_{0.33}Mn_{0.33}Co_{0.33}O₂, ou un matériau à base de type oxyde de nickel cobalt aluminium LiNixCoyAlzO2 avec x+y+z = 1, tel que LiNi_{0.8}Co_{0.15}Al_{0.05}O₂.

L'électrode négative ou anode est très souvent constituée de carbone, graphite ou de Li₄TiO₅O₁₂ (matériau titanate), éventuellement peut-être à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en œuvre.

L'anode et la cathode en matériau d'insertion au Lithium peuvent être déposées en continu selon une technique usuelle sous la forme d'une couche active sur une feuille ou feuillard métallique constituant un collecteur de courant.

Le collecteur de courant connecté à l'électrode positive est en général en aluminium.

Le collecteur de courant connecté à l'électrode négative est en général en cuivre, en nickel, en cuivre nickelé ou en aluminium.

Plus précisément, l'aluminium est utilisé pour les collecteurs de courant communs à des électrodes positive et négative de titanate Li₄Ti₅O₁₂. Le cuivre est plutôt pour les électrodes négatives de graphite (Cgr), de silicium (Si) ou de composite silicium (Si-C). Traditionnellement, une batterie ou accumulateur Li-ion utilise un couple de matériaux à l'anode et à la cathode lui permettant de fonctionner à un niveau de tension, typiquement entre 1,5 et 4,2 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages rigides (boitiers) sont usuellement fabriqués à partir d'un matériau métallique, typiquement un alliage d'aluminium ou en acier inoxydable ou d'un polymère rigide comme par exemple l'acrylonitrile butadiène styrène (ABS).

Les emballages souples, communément désignés sous la dénomination anglo-saxonne « Pouch », sont usuellement fabriqués à partir d'un matériau composite multicouche constitué d'une feuille d'aluminium recouverte par un ou plusieurs film(s) en polymère laminés par collage. Dans la plupart de ces emballages souples, le polymère recouvrant l'aluminium est choisi parmi le polyéthylène (PE), le propylène, le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N °ADR-0N25/AL40/CPP80.

La figure 3 illustre ce type d'emballage souple 6 qui est agencé pour isoler et étanchéifier la cellule électrochimique C tout en étant traversé par une partie de deux lamelles ou languettes 4, 5, communément appelée en anglais « tab », formant les bornes ou pôles et qui s'étendent dans le plan de la cellule électrochimique. La languette 4, constituant la borne positive, se présente sous la forme d'un feuillard métallique d'épaisseur de 0,2 à 0,4 mm, le plus souvent en aluminium. La languette 5, constituant la borne négative, se présente sous la forme d'un feuillard métallique de 0,2 à 0,4 mm, le plus souvent en matériau nickel ou en cuivre ou en cuivre nickelé.

L'avantage principal des emballages souples est leur légèreté. Les accumulateurs Li-ion avec les plus grandes densités d'énergie comportent de ce fait un emballage souple. Les accumulateurs à emballage souple sont de plus en plus utilisés du fait de leur densité énergétique élevée.

Un accumulateur souple, communément appelé en anglais « *Thin Film Battery»,* est le plus souvent constitué d'une seule cellule électrochimique.

L'épaisseur totale de l'accumulateur avec son emballage souple est généralement inférieure à 16 mm, qui est fonction des dimensions et de la chimie des matériaux d'électrodes, et ce sans altérer les performances lors du fonctionnement de l'accumulateur.

Un pack batterie est constitué d'un nombre variable d'accumulateurs pouvant atteindre plusieurs milliers qui sont reliés électriquement en série ou en parallèle entre eux et généralement par des barres de connexion, appelées usuellement busbars.

Un module de batterie ou un pack-batterie à accumulateurs souples est un assemblage par empilement d'une pluralité de ces accumulateurs souples de géométrie prismatique.

Dans le cadre de l'invention, on entend par « accumulateur de géométrie prismatique », un accumulateur de forme globalement prismatique, c'est-à-dire de forme globalement parallélépipédique, aplati selon une dimension, indépendamment de son mode de réalisation qui pourra être par enroulement d'une cellule, par empilement (« stacking »), etc.

Une difficulté inhérente à un assemblage par empilement d'accumulateurs souples est de pouvoir assurer des liaisons électriques fiables entre les bornes d'électrodes (languettes ou « tabs ») des différents accumulateurs empilés sans trop augmenter le poids, ni la complexité de l'assemblage en lui-même.

Cette difficulté est d'autant plus accrue que les bornes se présentent sous la forme de languettes flexibles, d'un feuillard métallique de très faible épaisseur, typiquement de 0,2 à 0,4mm.

Généralement, les accumulateurs empilés les uns sur les autres sont raccordés électriquement par les languettes d'électrode (« tabs) qui sont connectées les unes aux autres à l'aide de fils, de plaques ou de busbars par soudage.

En particulier, un procédé courant consiste à réaliser des soudures laser sur un collecteur de courant en cuivre ou en aluminium de type « busbar ».

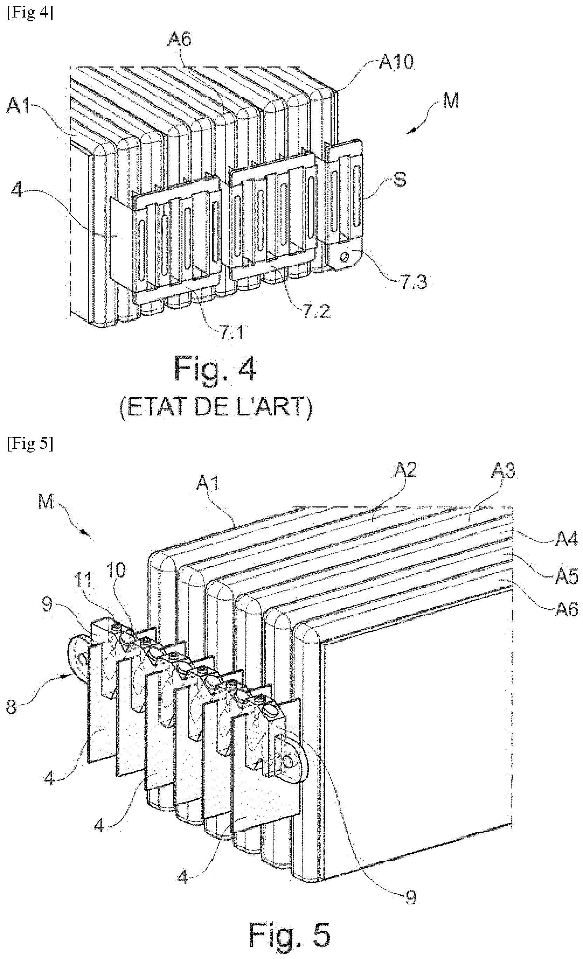

La figure 4 montre un exemple de réalisation de module de batterie réalisé avec un tel procédé : les accumulateurs souples A1 à A10 sont empilés les uns contre les autres et les languettes d'électrode (« tabs ») 4 sont soudées chacune par un cordon de soudure laser S à une plaque formant un busbar 7.1 à 7.3.

Comme on peut le voir sur cette figure 4, les languettes 4 sont partiellement pliées, et les plaques formant les busbars 7.1 à 7.3 sont connectées aux parties pliées, ce qui peut être complexe à réaliser.

De plus, les pièces connectées peuvent se séparer les unes des autres en raison d'impacts externes, ce qui peut entraîner une augmentation du nombre de produits défectueux.

En outre, les procédés de soudure comme celui illustré en figure 4, requièrent un outillage très spécifique.

Enfin, cet assemblage par soudage supprime toute possibilité de remplacer un accumulateur défectueux par un autre au sein de l'empilement ou alors au prix d'un coût déraisonnable. Autrement dit, il interdit tout démontage non destructif une fois réalisé.

En d'autres termes, il existe toujours un besoin d'assurer une connexion électrique fiable et pérenne entre des « tabs » de connexion de faible voire très faible épaisseur.

Plusieurs solutions sont mises en oeuvre ou décrites dans la littérature pour réaliser des liaisons électriques entre bornes ou pôles d'accumulateurs à emballage souple dans des pack-batteries à empilements.

Parmi ces solutions, celles les plus couramment utilisées pour interconnecter les accumulateurs impliquent, dans la majorité des cas, l'intégration de ces derniers au sein d'une structure mécanique plus ou moins complexe, afin de récupérer et positionner précisément les « tabs ».

Le brevet EP2854200B1décrit une intégration d'un unique accumulateur souple à l'intérieur d'un boitier rigide puis, une fois l'intégration réalisée, le raccordement électrique des « tabs» aux connectiques de puissance d'un barre qui forme un bornier.

La demande de brevet KR20120136542A1 propose deux solutions alternatives d'empilement d'accumulateurs souples :
- la première consiste à plaquer des accumulateurs les uns contre les autres et de les raccorder électriquement par l'intermédiaire de petites tôles en U formant des busbars, le tout étant maintenu par une visserie ;
- la seconde consiste à intercaler dans l'empilement entre deux accumulateurs souples une plaque dite de « connexion » qui intègre sur un de ses bords des borniers permettant de relier électriquement les « tabs » des accumulateurs entres eux. Chacune de ces deux solutions implique un travail de préformage des « tabs » comme le pliage ou le perçage de celles-ci. La demande WO 2014/126341 A1 décrit un dispositif permettant de relier électriquement les « tabs » d'une pluralité d'accumulateurs.

En résumé, toutes les solutions de l'état de l'art imposent un assemblage complexe, encombrant et souvent très impactant sur le volume global et la masse d'un module de batterie ou d'un pack-batterie.

Il existe ainsi un besoin d'améliorer les modules de batterie ou pack-batterie à empilement d'accumulateurs à emballage souple, notamment afin de pallier les inconvénients précités. Le but de l'invention est de répondre au moins en partie à ce besoin.

### Exposé de l'invention

Pour ce faire, l'invention concerne, sous l'un de ses aspects, un module de batterie ou pack-batterie comprenant :
- au moins un accumulateur, en particulier de géométrie prismatique comprenant chacun au moins une cellule électrochimique C formée d'une cathode, d'une anode et d'un électrolyte intercalé entre la cathode et l'anode, et un emballage souple agencé pour contenir avec étanchéité la cellule électrochimique tout en étant traversé par une partie d'une languettes de cathode et d'une languette d'anode, formant les pôles ou bornes qui s'étendent dans le plan de la cellule électrochimique;
- au moins un busbar de liaison électrique comprenant :
   un corps allongé selon un axe longitudinal, le corps comprenant au moins une échancrure et au moins un logement formant un guide débouchant sur un bord de l'échancrure,
   au moins un pion de serrage comprenant à l'une de ses extrémités longitudinales une surface de contact avec une languette de cathode ou d'anode, le pion de serrage étant monté coulissant dans le guide entre une position initiale dans laquelle sa surface de contact est en retrait de l'échancrure et une position de serrage dans laquelle sa surface de contact plaque et serre la languette de cathode ou d'anode insérée dans l'échancrure contre le bord de celle-ci qui est opposé à celui sur lequel débouche le guide,
   au moins un élément de maintien amovible du pion de serrage dans sa position de serrage. De préférence, l'échancrure et/ou le guide s'étende(nt) à l'oblique ou orthogonalement à l'axe longitudinal, la surface de contact du pion de serrage étant un biseau s'étendant sensiblement selon le même angle d'inclinaison que celui de l'échancrure.

Préférentiellement, le guide s'étend à l'oblique par rapport à l'axe longitudinal et l'élément de maintien s'étend à l'oblique ou perpendiculairement à l'axe longitudinal, l'élément de maintien étant encore plus préférentiellement perpendiculaire à l'axe longitudinal.

Ceci permet une plus grande compacité selon la direction de l'axe longitudinal du système de serrage par le pion de serrage et de maintien par le pion de maintien ainsi qu'une meilleure accessibilité du serrage et du maintien lors du montage/démontage des accumulateurs.

Le guide s'étend préférentiellement de manière oblique par rapport à l'échancrure avec un angle d'inclinaison compris entre 20° et 70°.

Dans le cas d'un module comprenant plusieurs accumulateurs ayant un emballage souple, l'axe longitudinal comporte de préférence une composante majoritaire selon l'axe de l'empilement des accumulateurs.

Selon un mode de réalisation avantageux, le module ou pack-batterie comprend:
- une pluralité d'accumulateurs, empilés les uns sur les autres ;
- au moins un busbar de liaison électrique comprenant une pluralité d'échancrures et de guides et une pluralité de pions de serrage monté chacun coulissant dans un des guides, la surface de contact de chaque pion de serrage plaquant et serrant une languette de cathode ou d'anode d'un de la pluralité d'accumulateurs insérée dans une des échancrures, dans sa position de serrage, afin de réaliser un montage série ou en parallèle de la pluralité des accumulateurs.

Le corps peut être monobloc ou alternativement comprendre une pluralité de blocs unitaires assemblés entre eux par une liaison à queue d'aronde, chacun des blocs unitaires intégrant une échancrure, un guide et un pion de serrage monté coulissant dans le guide.

Chacun des blocs unitaires peut comprendre avantageusement, sur l'un de ses bords longitudinaux, un tenon d'une des liaisons à queue d'aronde et sur l'autre de ses bords longitudinaux, opposé au tenon, une rainure d'une autre des liaisons à queue d'aronde. Selon un premier mode de réalisation avantageux:
- le corps comprend une pluralité de logements taraudés;
- chaque pion de serrage comprend une surface de référence et d'appui en regard d'un des logements taraudés;
- le busbar comprend une pluralité d'éléments à la fois de maintien amovible et de déplacement des pions de serrage, chaque élément étant une vis vissée dans un des logements taraudés et en appui contre la surface de référence et d'appui d'un des pions de serrage de sorte qu'un effort de vissage de la vis dans un des logements taraudés provoque le déplacement de sa position initiale vers sa position de serrage.

Selon un deuxième mode de réalisation avantageux:
- chaque pion de serrage comprend, son extrémité longitudinale opposée à celle de la surface de contact, une surface de référence et d'appui faisant saillie du corps ;
- le busbar comprend en tant qu'éléments à la fois de maintien amovible et de déplacement des pions de serrage, une plaque de compression en appui contre la surface de référence et d'appui de la pluralité des pions et une vis de compression vissée dans le corps de sorte qu'un effort de vissage de la vis de compression provoque un déplacement de la plaque vers le corps et par-là le déplacement de chacun de la pluralité des pions de sa position initiale vers sa position de serrage.

Selon une variante de réalisation, le corps est électriquement conducteur, de préférence en cuivre ou en aluminium. Selon cette variante, le corps comprend à au moins l'une de ses extrémités longitudinales une patte de raccordement électrique à un élément hors module ou pack, de préférence munie d'un œillet de raccordement électrique.

Pour une application Li-ion, chaque accumulateur est un accumulateur Li-ion dans lequel :
- le matériau d'électrode(s) négative(s) est choisi dans le groupe comportant le graphite, le lithium, l'oxyde de titanate Li₄TiO₅O₁₂;
- le matériau d'électrode(s) positive(s) est choisi dans le groupe comportant LiFePO₄, LiCoO₂, LiNi_{0.33}Mn_{0.33}Co_{0.33}O₂.

L'invention concerne également un busbar de liaison électrique comprenant :
- un corps allongé selon un axe longitudinal, le corps comprenant au moins une échancrure et au moins un logement formant un guide débouchant sur un bord de l'échancrure;
- un pion de serrage comprenant à l'une de ses extrémités longitudinales une surface de contact avec une languette de cathode ou d'anode d'un accumulateur, le pion de serrage étant monté coulissant dans le guide entre une position initiale et une position de serrage;
- au moins un élément de maintien amovible du pion de serrage dans sa position de serrage. L'invention a enfin pour objet un procédé de réalisation d'un module de batterie ou pack batterie tel que décrit précédemment, comprenant les étapes suivantes :
   i/ insertion d'une languette de cathode ou d'anode dans une échancrure du corps du busbar;
   ii/ déplacement d'un pion de serrage de sa position initiale à sa position de serrage de sorte que sa surface de contact plaque et serre la languette de cathode ou d'anode insérée dans l'échancrure contre le bord de celle-ci qui est opposé à celui sur lequel débouche le guide;
   iii/ maintien mécanique du pion de serrage par action sur l'élément de maintien amovible. Avantageusement, les étapes ii/ et iii/ sont réalisées par une même action de serrage sur une vis en tant qu'élément de déplacement et de maintien amovible.

Ainsi, l'invention consiste essentiellement à définir en tant que composant de liaison électrique entre accumulateurs à languettes formant les pôles ou bornes, un busbar dans le corps duquel chaque languette est insérée puis prise en étau par un pion de serrage formant une mâchoire mobile qui peut être déplacée aisément en coulissement dans le corps de sorte à réaliser une connexion électrique en série ou en parallèle en fonction du besoin.

De préférence, le coulissement du pion de serrage jusqu'à sa position de serrage est assuré par une vis de pression, vissée dans le corps du busbar et qui est en appui contre une surface de référence et d'appui pour réaliser le serrage souhaité et le maintien mécanique du pion. Le diamètre de la surface de contact avec une languette d'électrode, qui détermine la section de passage du courant peut être aisément adapté selon les spécifications d'un module ou pack-batterie.

Dans la réalisation, à des fins de compacité d'un busbar selon l'invention, un guide du pion de serrage est réalisé incliné par rapport à l'axe longitudinal du corps. Du fait de cette inclinaison, si un usinage traditionnel ne permet pas de réaliser le corps souhaité, alors un usinage par électroérosion ou à un moulage sous haute pression peut être envisagé. Le corps peut également être facilement réalisé par la bais des technologies de fabrications additives (impression 3D) de type frittage de poudre (FLS).

Pour adapter facilement et directement un busbar selon l'invention à un nombre choisi d'accumulateurs au sein d'un module de batterie ou pack-batterie, en lieu et place d'un corps monobloc, on peut assembler entre eux une pluralité de blocs de connexion avec un système mécanique rapide permettant un assemblage mécanique et électrique des blocs les uns par rapport aux autres.

En fonction des besoins d'intégration également, on peut prévoir un actionnement et un maintien mécanique des pions de serrage qui soit individualisé ou un système mécanique commun à l'ensemble des pions au sein d'un même busbar selon l'invention. Ce système commun permet le déplacement simultané avec une pression uniforme de tous les pions de serrage au sein d'un module ou pack-batterie. La facilité et la rapidité d'assemblage sont encore davantage accrues. En outre, le fait d'avoir un seul point de serrage commun simplifie également un montage à l'aveugle, ce qui est avantageux lors de la mise en place des accumulateurs en empilement à l'intérieur d'un module.

Au final, l'invention apporte de nombreux avantages parmi lesquels on peut citer:
- une intégration d'un busbar selon l'invention qui est simple, rapide et fiable au sein d'un module de batterie ou d'un pack batterie de moyenne ou grande série ;
- des liaisons électriques en sortie d'accumulateurs qui sont obtenues par la pression d'un pion formant une mâchoire et ne sont donc pas une liaison vissée ou soudée comme selon l'état de l'art avec leurs inconvénients afférents comme suit ;
- une bonne maîtrise du couple de serrage et du maintien du busbar par les pions de serrage contre le corps, dans la position de serrage et donc électriquement connectée des accumulateurs d'un module ou pack-batterie ;
- la possibilité de réaliser l'ensemble des éléments du busbar selon l'invention avec des matériaux électriques usuels, comme le cuivre et/ou l'aluminium, qui lui permettent d'être intégré au sein d'une architecture de batterie refroidie par immersion, sans risque de vieillissement prématuré ;
- une simplification de design d'un module de batterie comparativement à ceux selon l'état de l'art, avec un nombre de pièces limité. En particulier, il n'est pas besoin de rajouter des pièces de fixation, comme des tiges filetées, vis, écrou, plaque de serrage...
- la suppression d'une étape de process de soudage, par voie électrique ou soudage aux ultrasons, nécessaire dans les solutions selon l'état de l'art ;
- du fait des liaisons électriques sans soudure par busbar entre pion de serrage et languettes des accumulateurs, un démontage facile et non destructif d'un module de batterie : il devient plus facile de récupérer chaque accumulateur dans le cas d'une étape de démontage d'un module de batterie, pour un remplacement en cas de défectuosité ou pour le recyclage ;
- un impact favorable sur la densité d'énergie massique d'un module de batterie : le gain de masse réalisé sur l'ensemble des pièces métalliques de fixation, habituellement utilisées dans les solutions de l'état de l'art, va permettre d'améliorer la densité d'énergie massique (Wh/kg) d'une batterie ;

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion de format prismatique avec son emballage souple selon l'état de l'art.
[Fig 3] la figure 3 est une vue en perspective d'un accumulateur lithium-ion de format prismatique avec son emballage souple selon l'état de l'art.
[Fig 4] la figure 4 est une vue en perspective partielle d'une partie d'un module de batterie à plusieurs accumulateurs à emballage souple selon l'état de l'art, la figure 4 montrant la liaison électrique réalisé par soudure des languettes formant les bornes ou pôles des accumulateurs avec des busbars sous la forme de tôles.
[Fig 5] la figure 5 est une vue perspective partielle et par transparence d'un module de batterie à plusieurs accumulateurs à emballage souple selon l'invention, la figure 5 montrant la liaison électrique entre les languettes formant les bornes ou pôles des accumulateurs réalisées au moyen d'un busbar unique selon l'invention.
[Fig 6] la figure 6 est une vue en perspective d'un busbar à corps monobloc selon un mode de réalisation de l'invention.
[Fig 7] la figure 7 est une vue en coupe longitudinale du corps du busbar selon la figure 6.
[Fig 8] la figure 8 est une vue en coupe longitudinale partielle du busbar selon la figure 6 réalisée au niveau d'une échancrure, d'un pion et de la vis de serrage du pion.
[Fig 8A] la figure 8A est une vue en perspective montrant la vis de serrage en appui contre la surface de référence et d'appui d'un pion selon la figure 8.
[Fig 9] la figure 9 est une vue en perspective d'un busbar à corps constitué de blocs assemblés entre eux selon un autre mode de réalisation de l'invention.
[Fig 10] la figure 10 est une vue en perspective montrant un bloc de la figure 9.
[Fig 11] la figure 11 est une vue en perspective d'une alternative du serrage des pions au moyen d'un élément commun amovible fixé sur un corps monobloc de busbar selon l'invention.
[Fig 12] la figure 12 est une vue en perspective montrant une variante de réalisation de la figure 11.
[Fig 13] la figure 13 est une vue en perspective montrant une première configuration d'implantation d'un busbar selon l'invention dans un module de batterie.
[Fig 14] la figure 14 est une vue en perspective d'une deuxième configuration d'implantation d'un busbar selon l'invention dans un module de batterie.
[Fig 15] est une vue en perspective vue en perspective d'une troisième configuration d'implantation d'un busbar selon l'invention dans un module de batterie.

### Description détaillée

Les figures 1 à 4 sont relatives à des exemples différents d'accumulateur Li-ion, d'emballages souples et d'un module de batterie selon l'état de l'art. Ces figures 1 à 4 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 15.

Dans l'ensemble de la présente demande, les termes « inférieur », « supérieur », « bas », « haut », « dessous » et « dessus » sont à comprendre par référence par rapport à un module de batterie selon l'invention avec des accumulateurs Li-ion positionnés à l'horizontal avec des languettes formant les bornes ou pôles qui s'étendent la verticale.

De même, les termes « longitudinaux » et « latéraux » sont à considérer par rapport à la direction longitudinale X1 selon laquelle un corps de busbar conforme à l'invention est allongé.

Dans les exemples illustrés ci-après, les accumulateurs A1 à AN illustrés sont de format prismatique, à emballage souple 6, usuellement appelés « pouch ».

Les accumulateurs A1 à AN peuvent être reliés électriquement en série et/ou en parallèle dans un module ou dans un pack-batterie au moyen d'au moins un busbar selon l'invention. On a représenté en figure 5, un exemple d'une partie de module de batterie M comprenant plusieurs accumulateurs adjacents A1, A2, ...A6, c'est-à-dire empilés les uns sur les autres dont les languettes d'électrode (« tabs ») 4 sont toutes reliées électriquement entre elles au moyen d'un busbar 8 de liaison électrique selon l'invention, qui est fixé de manière amovible sur chacune de ces languettes 4 comme détaillé ci-après.

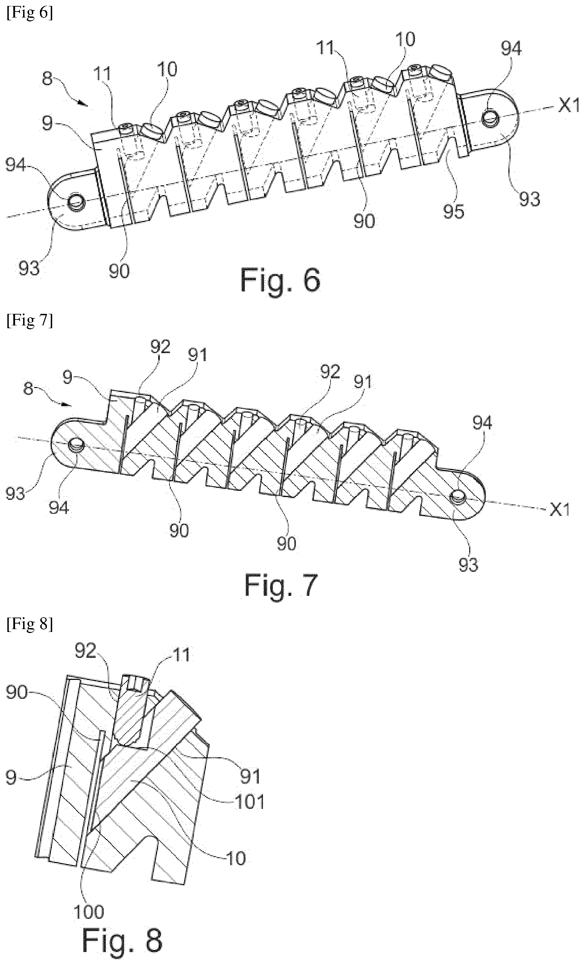

Tel qu'illustré aux figures 6 à 8, le busbar 8 de liaison électrique comprend tout d'abord un corps 9 allongé selon un axe longitudinal (X1) et dans lesquelles ont été réalisées une pluralité d'échancrures 90, une pluralités de logements 91 formant chacun un guide débouchant sur un bord d'un des échancrures 90.

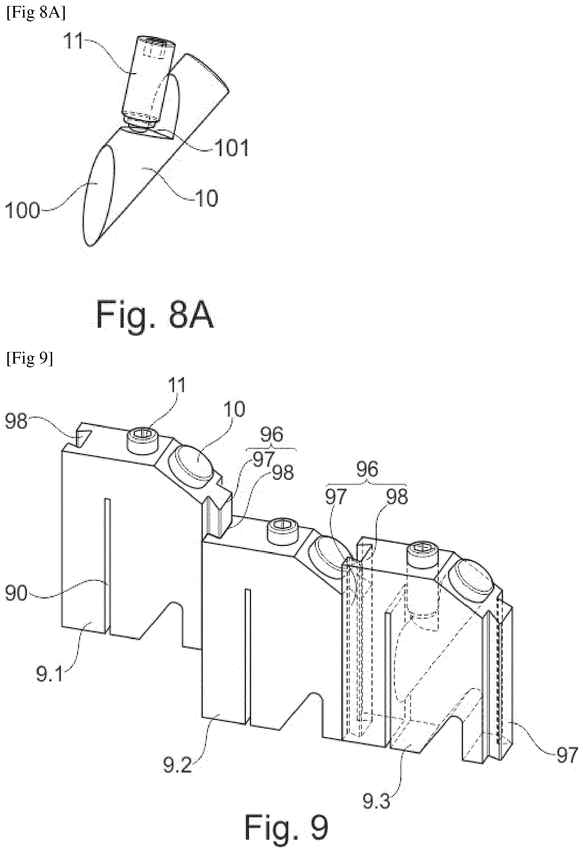

Un pion de serrage 10 comprenant à l'une de ses extrémités longitudinales une surface de contact 100 est monté coulissant dans chaque guide 91 entre une position initiale dans laquelle sa surface de contact 100 est en retrait d'une échancrure 90 (figure 8) et une position de serrage dans laquelle sa surface de contact 100 plaque et serre la languette d'électrode 4 insérée dans l'échancrure contre le bord de celle-ci qui est opposé à celui sur lequel débouche le guide (figure 5).

Dans les exemples illustrés, l'échancrure 90 s'étend orthogonalement à l'axe longitudinal X1 et le guide 91 s'étend à l'oblique par rapport à l'axe longitudinal X1 et la surface de contact 100 est un biseau s'étendant également orthogonalement à l'axe X1. A titre indicatif, l'angle formé entre l'axe du guide 91 et le plan de l'échancrure est égal à 34°.

Un élément 11 maintient de manière amovible le pion de serrage 10 dans sa position de serrage.

Plus précisément, dans l'ensemble des figures 5 à 10, l'élément de maintien est une vis de serrage 11 qui vissée dans un logement taraudé 92. Cette vis de serrage 11, par exemple à tête hexagonale, permet à la fois de déplacer le pion 10 pour qu'il vienne plaquer et serrer une languette 4 contre le bord de l'échancrure 90 et de garantir son maintien mécanique dans sa position de serrage. Ainsi, le pion 10 forme en quelque sorte une mâchoire de serrage. Pour ce faire, le pion 10 présente une encoche dans sa portion centrale pour définir une surface de référence et d'appui 101 sur laquelle la vis de serrage 11 vient exercer sa pression. Autrement dit, un effort de vissage sur la vis 11 permet de déplacer le pion 10 dans son logement 11 puis de le bloquer lorsqu'il atteint sa position de serrage de la languette 4.

Le pion 11 peut être réalisé selon les besoins (dimensionnement et pression de contact) en métal, typiquement en aluminium ou dans une matière ayant une meilleure tenue mécanique comme l'inox.

Le diamètre du pion 11 et son angle de tangence (inclinaison du logement 91) déterminent la surface de contact 100, donc la section de passage du courant à travers la languette 4 serrée. A titre indicatif, avec l'angle de 34°, la surface de contact 100 peut être d'environ 50mm² pour un courant compris entre 350 et 500A.

Dans l'exemple illustré aux figures 6 à 8, le corps 9 du busbar 8 est monobloc.

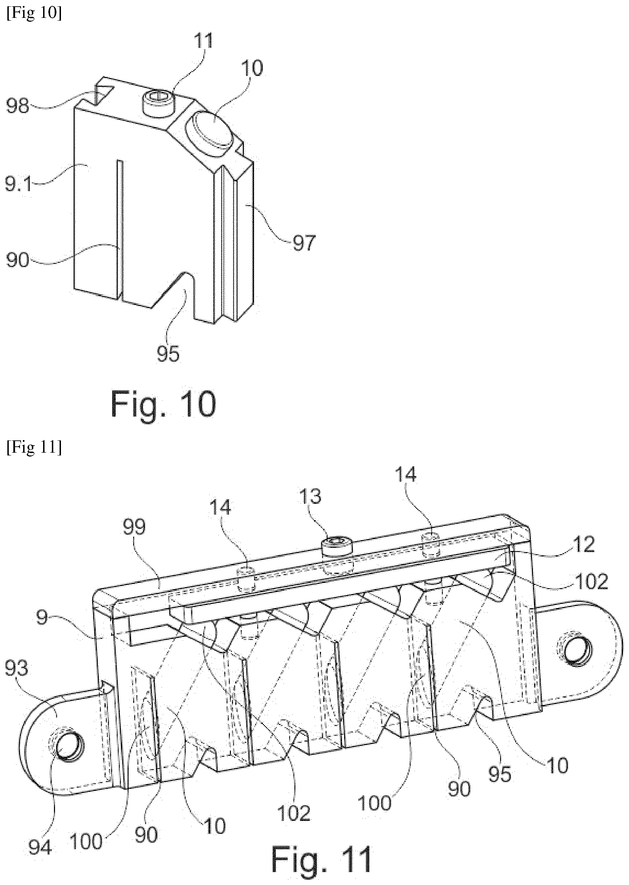

Un alternative à cette réalisation est montrée aux figures 9 et 10 : le corps 9 est constitué de l'assemblage de plusieurs blocs unitaires 9.1, 9.2, 9.3 assemblés entre eux par des systèmes à queue d'aronde 96.

Plus précisément, chaque bloc unitaire 9.1 comprend, sur l'un de ses bords longitudinaux, un tenon 97 d'une des liaisons à queue d'aronde et sur l'autre de ses bords longitudinaux, opposé au tenon, une rainure 98 d'une autre des liaisons à queue d'aronde. Ainsi un tenon 97 s'emboîte dans une rainure 98 de forme complémentaire que celle du tenon 97 pour assurer l'assemblage entre deux blocs unitaires adjacents. Dans l'exemple illustré, le tenon 97 et la rainure 98 présente une section droite qui est trapézoïdale.

Dans les exemples illustrés des figures 5 à 10, chaque pion de serrage 10 est déplacé de sa position initiale à sa position de serrage par une vis de serrage 11.

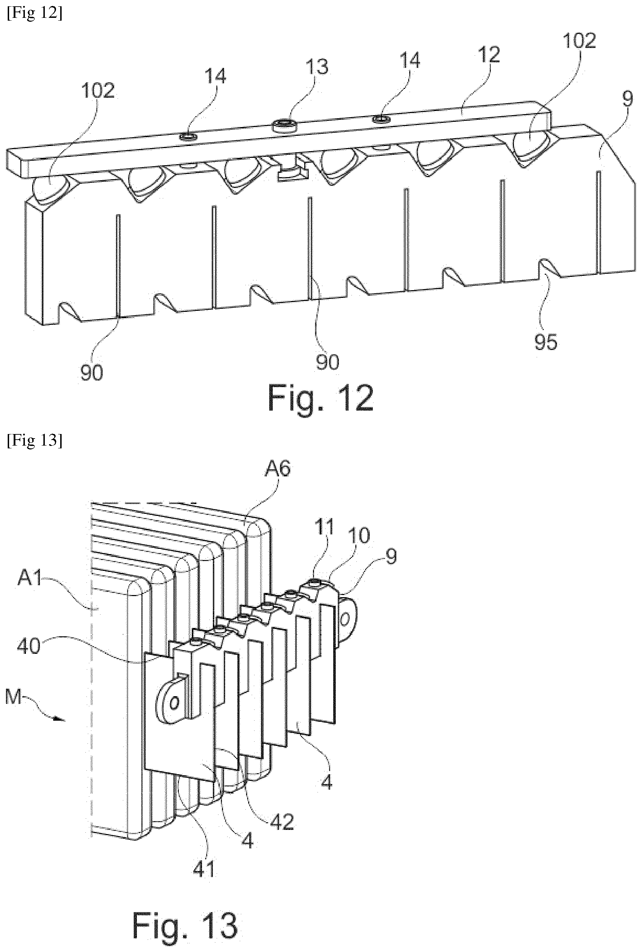

Les figures 11 et 12 montrent une alternative selon laquelle tous les pions de serrage 10 sont déplacés simultanément et avec un effort uniforme au moyen d'une plaque de compression 12 qui peut être déplacée en translation au moyen d'une vis de serrage 13, qui est vissée au corps 9 du busbar de préférence dans sa portion centrale.

La plaque de compression 12 est en appui directe avec l'extrémité longitudinale 102 de tous les pions de serrage 10, cette extrémité 102 constituant ainsi une surface de référence et d'appui de la plaque 12. De préférence, comme montré sur ces figures 11, pour avoir un contact ponctuel et donc avoir une répartition de l'effort de la compression minimal et uniforme pour tous les pions 10, la surface 102 est hémisphérique. Pour guider la plaque de compression 12 sur toute sa longueur, des pions de guidage 14 formant des glissières peuvent être insérés dans le corps 9 et dans des trous traversants de la plaque 12.

La figure 11 montre un agencement dans lequel la plaque de compression 12 peut être agencée complètement à l'intérieur du corps 9 avec une portion 99 de celle-ci qui le recouvre. La figure 12 montre un agencement où la plaque 12 est agencée directement sur le dessus du corps 9, ce qui présente par rapport à l'agencement de la figure 11 d'une plus grande compacité.

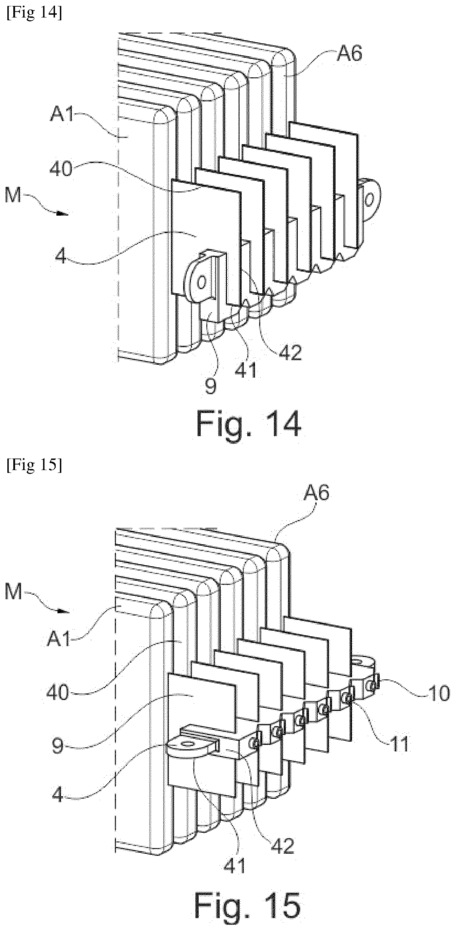

Avec un busbar 8 selon l'invention telle que décrite, on peut aisément réaliser plusieurs intégrations dans des modules de batterie M avec des agencement différents. Par exemple, on peut fixer le busbar 8 sur un bord longitudinal supérieur 40 des languettes 4 (figures 13) ou sur le bord inférieur 41 (figure 14) ou bien encore sur le bord latéral d'extrémité 42 (figure 14).

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

Si dans l'ensemble des exemples illustrés, les emballages souples des accumulateurs conformes à l'invention sont de format prismatique, l'invention s'applique bien entendu à tous les accumulateurs à emballage souple qui comprennent, en tant que bornes ou pôles, des languettes ou « tabs ».

Dans l'ensemble des exemples illustrés, le corps 9 du busbar 8 est électriquement conducteur, par exemple réalisé en aluminium ou en cuivre. Dans ce cas, le courant électrique passe au travers du corps 9 et on peut prévoir à cet effet que le corps 9 présente à l'une et/ou l'autre de ses extrémités longitudinales une patte de liaison électrique 93 notamment munie d'un œillet de connexion électrique 94. Mais on peut aussi envisager que le corps 9 soit électriquement isolant. Dans ce cas, le courant électrique peut passer par les pions de serrage 10 et/ou les moyens de maintien, notamment la plaque de compression 12 qui sont électriquement conducteurs, comme pour les exemples des figures 11 et 12.

En lieu et place de vis de serrage 11 et d'une plaque de compression 12, on peut envisager d'autres éléments de maintien mécanique d'un pion de serrage 10, qui peuvent d'ailleurs ne servir qu'au maintien et non pas également au déplacement dudit pion. Par exemple, un système de verrouillage à came, de type de celui rencontré dans les sauterelles, un doigt d'indexage qui viendrait bloquer le pion ou encore un système à ressort calibré...

Dans l'ensemble des exemples illustrés, un même busbar selon l'invention est fixé et relie une pluralité de languettes d'électrode de même polarité. Il va de soi qu'en fonction des configurations électriques souhaitées (série ou parallèle électrique, on peut envisager d'avoir un même busbar fixant et reliant électriquement des languettes de polarité positive et négative.

Dans le mode de réalisation des figures 9 et 10, un bloc unitaire intègre une unique échancrure et un seul pion de serrage. On peut aussi envisager de réaliser des blocs assemblés à d'autres, de dimensions différentes et/ou comprenant plusieurs échancrures et pions de serrage.

Dans ce même mode des figures 9 et 10, le système d'assemblage entre blocs montré est un système à queue d'aronde. On peut envisager d'autres modes d'assemblage, par exemple tenon-mortaise avec vis ou goupille. De même, la section droite du tenon et de la rainure peut être triangulaire au lieu d'être trapézoïdale.

## Revendications

1. Module (M) de batterie ou pack-batterie comprenant :
- au moins un accumulateur, en particulier de géométrie prismatique (A1, A2...AN) comprenant chacun au moins une cellule électrochimique C formée d'une cathode (2), d'une anode (3) et d'un électrolyte intercalé entre la cathode et l'anode, et un emballage (6) souple agencé pour contenir avec étanchéité la cellule électrochimique tout en étant traversé par une partie d'une languettes de cathode (4) et d'une languette d'anode (5), formant les pôles ou bornes qui s'étendent dans le plan de la cellule électrochimique;
- au moins un busbar de liaison électrique (8) comprenant :
- un corps (9) allongé selon un axe longitudinal (X1), le corps comprenant au moins une échancrure (90) et au moins un logement (91) formant un guide débouchant sur un bord de l'échancrure,
- au moins un pion de serrage (10) comprenant à l'une de ses extrémités longitudinales une surface de contact (100) avec une languette de cathode ou d'anode, le pion de serrage étant monté coulissant dans le guide entre une position initiale dans laquelle sa surface de contact est en retrait de l'échancrure et une position de serrage dans laquelle sa surface de contact plaque et serre la languette de cathode ou d'anode insérée dans l'échancrure contre le bord de celle-ci qui est opposé à celui sur lequel débouche le guide,
- au moins un élément (11) de maintien amovible du pion de serrage dans sa position de serrage,
l'échancrure et/ou le guide s'étendant à l'oblique ou orthogonalement à l'axe longitudinal (X1), la surface de contact du pion de serrage étant un biseau s'étendant sensiblement selon le même angle d'inclinaison que celui de l'échancrure.

2. Module de batterie ou pack-batterie selon la revendication 1, comprenant :
- une pluralité d'accumulateurs, empilés les uns sur les autres ;
- au moins un busbar de liaison électrique comprenant une pluralité d'échancrures et de guides et une pluralité de pions de serrage monté chacun coulissant dans un des guides, la surface de contact de chaque pion de serrage plaquant et serrant une languette de cathode ou d'anode d'un de la pluralité d'accumulateurs insérée dans une des échancrures, dans sa position de serrage, afin de réaliser un montage série ou en parallèle de la pluralité des accumulateurs.

3. Module de batterie ou pack-batterie selon la revendication 2, le corps étant monobloc.

4. Module de batterie ou pack-batterie selon la revendication 2, le corps comprenant une pluralité de blocs unitaires (9.1 à 9.3) assemblés entre eux par une liaison à queue d'aronde (96), chacun des blocs unitaires intégrant une échancrure, un guide et un pion de serrage monté coulissant dans le guide.

5. Module de batterie ou pack-batterie selon la revendication 4, chacun des blocs unitaires comprenant, sur l'un de ses bords longitudinaux, un tenon (97) d'une des liaisons à queue d'aronde et sur l'autre de ses bords longitudinaux, opposé au tenon, une rainure (98) d'une autre des liaisons à queue d'aronde.

6. Module de batterie ou pack-batterie selon l'une des revendications 1 à 5,
- le corps comprenant une pluralité de logements taraudés (92) ;
- chaque pion de serrage comprenant une surface de référence et d'appui (101) en regard d'un des logements taraudés;
- le busbar comprenant une pluralité d'éléments à la fois de maintien amovible et de déplacement des pions de serrage, chaque élément étant une vis (11) vissée dans un des logements taraudés et en appui contre la surface de référence et d'appui d'un des pions de serrage de sorte qu'un effort de vissage de la vis dans un des logements taraudés provoque le déplacement de sa position initiale vers sa position de serrage.

7. Module de batterie ou pack-batterie selon l'une des revendications 1 à 5,
- chaque pion de serrage comprenant, son extrémité longitudinale opposée à celle de la surface de contact, une surface de référence et d'appui (102) faisant saillie du corps ;
- le busbar comprenant en tant qu'éléments à la fois de maintien amovible et de déplacement des pions de serrage, une plaque de compression (12) en appui contre la surface de référence et d'appui de la pluralité des pions et une vis de compression (13) vissée dans le corps de sorte qu'un effort de vissage de la vis de compression provoque un déplacement de la plaque vers le corps et par-là le déplacement de chacun de la pluralité des pions de sa position initiale vers sa position de serrage.

8. Module de batterie ou pack-batterie selon l'une des revendications précédentes, le corps étant électriquement conducteur, de préférence en cuivre ou en aluminium.

9. Module de batterie ou pack-batterie selon la revendication 8, le corps comprenant à au moins l'une de ses extrémités longitudinales une patte de raccordement électrique (93) à un élément hors module ou pack, de préférence munie d'un œillet de raccordement électrique (94).

10. Module de batterie (M) selon l'une des revendications précédentes chaque accumulateur étant un accumulateur Li-ion dans lequel :
- le matériau d'électrode(s) négative(s) est choisi dans le groupe comportant le graphite, le lithium, l'oxyde de titanate Li₄TiO₅O_{12 ;}
- le matériau d'électrode(s) positive(s) est choisi dans le groupe comportant LiFePO₄, LiCoO₂, LiNi_{0.33}Mn_{0.33}Co_{0.33}O₂.

11. Busbar de liaison électrique (8) comprenant :
- un corps (9) allongé selon un axe longitudinal (X1), le corps comprenant au moins une échancrure (90) et au moins un logement (91) formant un guide débouchant sur un bord de l'échancrure;
- un pion de serrage (10) comprenant à l'une de ses extrémités longitudinales une surface de contact (100) avec une languette de cathode ou d'anode (4) d'un accumulateur, le pion de serrage étant monté coulissant dans le guide entre une position initiale et une position de serrage;
- au moins un élément (11) de maintien amovible du pion de serrage dans sa position de serrage,
l'échancrure et/ou le guide s'étendant à l'oblique ou orthogonalement à l'axe longitudinal (X1), la surface de contact du pion de serrage étant un biseau s'étendant sensiblement selon le même angle d'inclinaison que celui de l'échancrure.

12. Procédé de réalisation d'un module de batterie (M) ou pack-batterie selon l'une des revendications 1 à 10, comprenant les étapes suivantes :
i/ insertion d'une languette de cathode ou d'anode dans une échancrure du corps du busbar;
ii/ déplacement d'un pion de serrage de sa position initiale à sa position de serrage de sorte que sa surface de contact plaque et serre la languette de cathode ou d'anode insérée dans l'échancrure contre le bord de celle-ci qui est opposé à celui sur lequel débouche le guide;
iii/ maintien mécanique du pion de serrage par action sur l'élément de maintien amovible.

13. Procédé de réalisation selon la revendication 12, les étapes ii/ et iii/ étant réalisées par une même action de serrage sur une vis en tant qu'élément de déplacement et de maintien amovible.
